# EUROPÄISCHE PATENTANMELDUNG

(11) **EP 1 477 271 A2**
(43) Veröffentlichungstag der Anmeldung: **17.11.2004**
(21) Anmeldenummer: 04007449.4
(22) Anmeldetag: 26.03.2004
(51) Int. Cl.: B23Q 5/00, H02G 11/00

(54) **Schlittensystem mit zumindest einem Schlitten zur Nachführung der Versorgungsleitung, insbesondere für ein Fahrzeug**

(30) Priorität: 28.04.2003 DE 10319123; 28.04.2003 DE 20306560 U
(71) Anmelder: SIEMENS AKTIENGESELLSCHAFT, 80333 München (DE)
(72) Erfinder: Grimm, Peter, Dr., 91056 Erlangen (DE)

(57) **Zusammenfassung**

Das erfindungsgemäße Schlittensystem weist einen Schlitten (900) auf, der zur Nachführung der Versorgungsleitung (105) insbesondere für ein Fahrzeug (101) dient. Zur Führung des Schlittens ist ein Schienensystem (200) aus ringförmig geschlossenen Schienenelementen (201a,201b,201c) vorhanden, deren tangentiale Verbindungsstellen (202a,202b,202c) als Schienenweichen (203b) ausgebildet sind. Der Schlitten weist mindestens zwei Linearmotoren (901,903) auf, die so angeordnet sind, dass durch eine Abschaltung eines der Linearmotoren (903) zumindest im Bereich einer tangentialen Verbindungsstelle (202b) zweier Schienenelemente (201b,201c) ein Übergang des Schlittens in der Schienenweiche (203b) aus einem Schienenelement (201b) in ein angrenzendes Schienenelement (201c) hervorgerufen wird. Die Erfindung weist u.a. den Vorteil auf, dass der Schlitten mit hoher Geschwindigkeit in dem Schienensystem geführt werden kann und somit eine hohe Manövrierbarkeit eines daran angebundenen Fahrzeugs möglich ist.

## Beschreibung

In Ausnahmefällen kann es erforderlich sein, ein an sich frei steuerbares Fahrzeug mit gegebenenfalls zusätzlichen Versorgungsleitungen zu versehen. Diese Situation kann z.B. bei Versuchsfahrzeugen auftreten, die in einer Versuchshalle unter Umgehung eines Verbrennungsmotors z.B. mit einem Elektroantrieb betrieben werden. Solche Versuchsfahrzeuge können z.B. zur Simulation der Fahrdynamik bzw. von ausgewählten Fahrzeugkomponenten, wie z.B. Achsen, Radaufhängungen, Lenkungen, Bremsen u.v.m. dienen. Mit Versuchsfahrzeugen dieser Art können einerseits aufwendige Feldversuche reduziert und andererseits Simulationen unter Laborbedingungen durchgeführt werden. Es können also sowohl Kosteneinsparungen als auch erheblich verbesserte Versuchsbedingungen erreicht werden.

Die Anbindung eines solchen Fahrzeugs an Versorgungsleitungen kann dabei einerseits dem Zweck dienen, das Versuchsfahrzeug unter Vermeidung von aufwendigen Batterien mit ausreichender elektrischer Energie zu versorgen. Würde das Versuchsfahrzeug statt dessen mit Batterien versehen werden, so könnten die Fahrdynamik betreffende Meßwerte durch die in der Regel erheblichen Massen von Batterien verfälscht werden. Andererseits können über solche Versorgungsleitungen auch große Mengen an Meßwerten über entsprechende Datenbusverbindungen an elektronische Auswerteeinrichtungen übertragen werden.

Bei einer Anordnung der obigen Art muß die Versorgungsleitung möglichst ohne Verwicklungen den Bewegungen des Versuchsfahrzeugs auf der Fahrfläche nachgeführt werden. Hierzu könnten prinzipiell z.B. Schlittensysteme eingesetzt werden, die von der Versorgung der Laufkatze eines Hallenkranes bekannt sind.

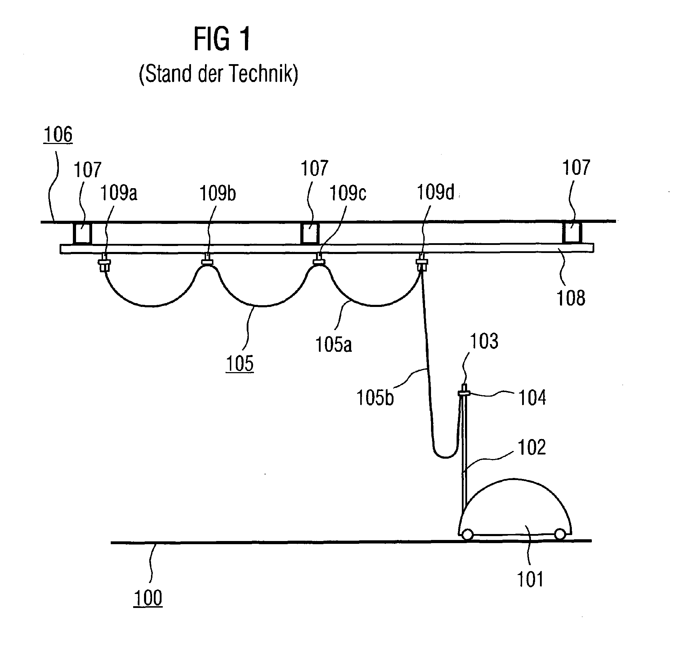

In Fig. 1 ist beispielhaft eine Anordnung dieser Art dargestellt. Ein Fahrzeug 101, z.B. ein fahrerloses Versuchs- oder Transportfahrzeug mit Elektroantrieb, soll auf einer Fahrfläche 100 z.B. in einer Versuchs- oder Fertigungshalle frei verfahrbar sein können. Das Fahrzeug 101 ist über eine Versorgungsleitung 105 z.B. mit nicht dargestellten Energieversorgungseinrichtungen und Systemen zu Datenübertragung und Verarbeitung verbunden. Um dem Fahrzeug 101 trotz der Anbindung an die Versorgungsleitung 105 einen möglichst großen Bewegungsradius zu ermöglichen, wird die Versorgungsleitung über ein an einer Decke bzw. Hängetragevorrichtung 106 z.B. in einer Halle angebrachtes Schienensystem geführt.

Das Schienensystem von Figur 1 weist einerseits eine Längsschiene 108 zur Führung von Schlitten auf. Über mehrere darin gelagerte Schlitten wird ein erster Abschnitt 105a der Leitung 105 geführt. Ein erster, bevorzugt ortsfester Schlitten 109a, dient als mechanischer Übergabepunkt für die Versorgungsleitung 105. Dieser hängende, erste Teil der Versorgungsleitung 105a wird über bevorzugt in der Längsschiene 108 verschiebbare zweite, dritte Schlitten 109b, 109c bis zu einem vierten Schlitten 109d geführt. Von dort geht ein zweiter Abschnitt 105b der Leitung 105 zu dem zu versorgenden Fahrzeug 101 herab und wird z.B. über eine drehbare Haltevorrichtung 104 am Kopfende 103 einer Führungsstange 102 erfasst. Die Versorgungsleitung kann dann bis in das Versuchsfahrzeug 101 hinein geführt werden. Die verschiebbare Lagerung der Hängeschlitten 109a bis 109d für die Leitung ermöglicht dem Fahrzeug 101 Bewegungen in Richtung der Längsschiene 108. Zur Ermöglichung von Bewegungen auf der gesamten Fläche 100, ist die Längsschiene 108 zusätzlich über bevorzugt motorisch angetriebene Querschienen 107 verschiebbar.

Das in Fig. 1 dargestellte Führungssystem weist den Nachteil auf, dass eine Nachführung der Versorgungsleitung 105 nur mit eingeschränkter Geschwindigkeit möglich ist. Die Bewegungsdynamik des Versuchsfahrzeugs 101 wird hierdurch insbesondere dadurch eingeschränkt, dass eine Querverschiebung der Längsschiene 108 auf den Querschienen 107 nur mit eingeschränkten Beschleunigungswerten möglich ist. Mit dem Versuchsfahrzeug 101 ist es somit nicht möglich, z.B. hochdynamische Kurvenfahrten auf der gesamten Fahrfläche 100 uneingeschränkt zu simulieren. Die Gefahr eines Abreißens insbesondere des Leitungsabschnitts 105b kann auf Grund der Trägheit von Querpositionierungen der Längsschiene nicht ausgeschlossen werden.

Der Erfindung liegt die Aufgabe zu Grunde, ein Schlittensystem zur Nachführung einer Versorgungsleitung anzugeben, welches auch hochdynamische Bewegungsrichtungsänderungen von Einrichtungen ermöglicht, die an das Ende der Versorgungsleitung angeschlossen sind.

Die der Erfindung zu Grunde liegende Aufgabe wird mit den Merkmalen des Schlittensystems von Anspruch 1 gelöst.

Das erfindungsgemäße Schlittensystem weist zur Führung eines Schlittens ein Schienensystem mit ringförmig geschlossenen Schienenelementen auf. Vorteilhaft sind die Schienenelemente kreisförmig. Die tangentialen Verbindungsstellen der Schienenelemente sind als Schienenweichen für den Schlitten ausgebildet. Der Schlitten des erfindungsgemäßen Schlittensystems weist mindestens zwei Linearmotoren auf, die so angeordnet sind, dass durch eine Abschaltung eines der beiden Linearmotoren zumindest im Bereich einer tangentialen Verbindungsstelle zweier Schienenelemente ein Übergang des Schlittens in der Schienenweiche aus dem einen Schienenelement in das angrenzende Schienenelement hervorgerufen wird.

Ein Schlittensystem gemäß der Erfindung weist zum einen den Vorteil auf, dass das Schienensystem ohne geradlinige Teilbereiche aufgebaut ist. Ein darin geführter Schlitten befindet sich somit in einer ständigen Kurvenbewegung. Hierdurch ist es leichter möglich, schnellen Richtungsänderungen z.B. eines Versuchsfahrzeuges zu folgen, dass über eine von dem Schlitten geführte Versorgungsleitung gespeist wird. Insbesondere bei kreisförmigen Schienenelementen können deren Krümmungsradien vorteilhaft einerseits auf die davon zu überdeckende Fahrfläche und andererseits auf die Dynamik der zu erwartenden Richtungsänderungen eines darauf fahrenden Versuchsfahrzeuges abgestimmt werden. Da die tangentialen Verbindungsstellen der Schienenelemente als Schienenweiche ausgebildet sind, kann ein in den Schienen geführter Schlitten auch mit einer hohen Geschwindigkeit von einem Schienenelement in ein anderes Schienenelement übergeleitet werden. Einerseits ist ein solcher Übergang quasi harmonisch, andererseits treten bis auf die Richtungsänderung keine veränderten Beträge bei der Seitenbeschleunigung auf.

Die Erfindung weist den weiteren Vorteil auf, dass der Übergang eines Schlittens in einer Schienenweiche an einer tangentialen Verbindungsstelle zweier Schienenelemente keinerlei mechanische Hilfsmittel erfordert. Vielmehr kann eine Umleitung eines Schlittens von einem in ein anderes, bevorzugt kreisförmiges Schienenelement allein durch eine elektrische Umschaltung bei den beiden Linearmotoren des Schlittens erfolgen. Sind beide Linearmotoren aktiviert, so wird eine Vorwärtsbeschleunigung auf den Schlitten ausgeübt und dieser durch die Krümmung des Schienenbereiches geführt, in dem sich dieser gerade befindet. Ist auf Grund einer Richtungsänderung z.B. eines Versuchsfahrzeuges auch eine entsprechende Richtungsänderungen des Schlittens erforderlich, der die Versorgungsleitung des Versuchsfahrzeugs nachführt, so kann dies erfindungsgemäß durch eine Zu- bzw. Abschaltung eines der beiden Linearmotoren im Schlitten erreicht werden.

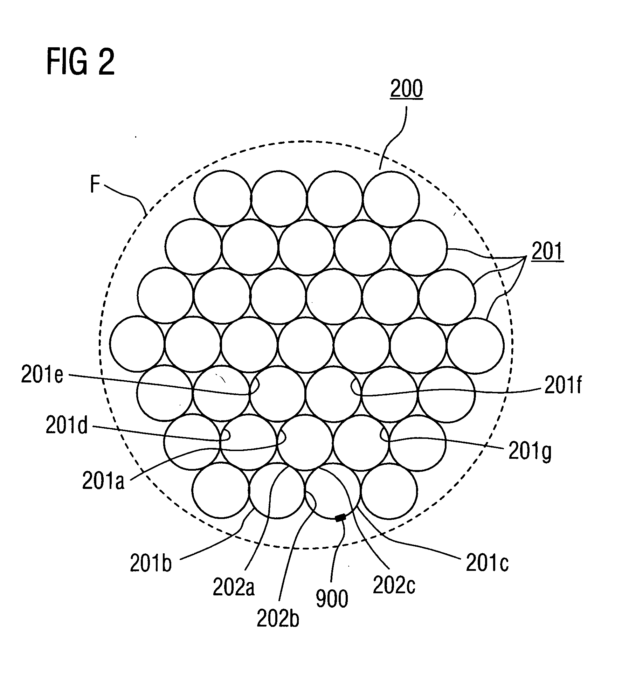

Vorteilhaft sind die Linearmotoren in einem Schlitten in Bewegungsrichtung annähernd so nebeneinander liegend angeordnet, dass durch eine Abschaltung eines der beiden Linearmotoren eine Zugkraft in Richtung auf die Schienenwand von demjenigen Schienenelement generiert wird, in das der Schlitten übergehen soll. Vorteilhaft sind die Zu- und Abschaltungen durch vor und nach einer Schienenweiche platzierte, fernsteuerbare Schaltelemente auslösbar, die von dem Schlitten passiert werden. Dies wird nachfolgend an den Ausführungsbeispielen der Figuren 2 bis 5 noch näher erläutert werden.

Vorteilhafte Weiterbildungen des erfindungsgemäßen Systems sind in den Unteransprüchen angegeben. Es zeigen
- Fig. 1: das bereits erläuterte, bekannte System zur Führung von Schlitten für Versorgungsleitungen mit einer in Querrichtung verschiebbaren Längsschiene zur Führung von Schlitten in der Art einer Führung für die Laufkatze eines Kranes,
- Fig. 2: eine Draufsicht auf eine bevorzugte Ausführungsform des erfindungsgemäßen Schlittensystems, wobei die ringförmig geschlossenen Schienenelemente bevorzugt kreisförmig sind,
- Fig. 3: einen Ausschnitt aus der Schienenanordnung von Fig. 2, bei denen gemäß einer weiteren, bevorzugten Ausführung der Erfindung die kreisförmigen Schienenelemente aus Schienenweichen mit zwei gegeneinander gekrümmten Schienensegmenten und aus halbkreisförmigen Schienenbögen zusammengesetzt sind,
- Fig. 4: eine Draufsicht auf eine beispielhafte Ausführung für eine Schienenweiche des erfindungsgemäßen Schlittensystems, und
- Fig. 5: einen Schnitt durch eine Schiene des erfindungsgemäßen Schlittensystems mit einem innen liegenden Schlitten.

Bei der im Beispiel der Fig. 2 gezeigten Ausführung für ein gemäß der Erfindung gestaltetes Schienensystem 200 sind die ringförmig geschlossenen Schienenelemente 201 vorteilhaft kreisförmig. Abhängig von der jeweiligen Anwendung können die ringförmig geschlossenen Schienenelemente 201 auch eine andere Form aufweisen, z.B. eine ovale Form. Die Schienenelemente sind in Fig. 2 beispielhaft so angeordnet, dass die Gesamtanordnung eine annähernd wabenförmige Außenkontur aufweist. In diesem Schienensystem wird beispielhaft ein Schlitten 900 geführt. Dient dieser zur Nachführung einer mit einem Fahrzeug verbundenen Versorgungsleitung, so kann dieses innerhalb einer annähernd kreisförmigen Fahrfläche F unterhalb des Schienensystems 200 manövriert werden. Besonders bei kreisförmiger Ausführung der Schienenelemente 201 bietet das erfindungsgemäße System den besonderen Vorteil, dass es auf einfache Weise durch Anbau weiterer oder Abbau nicht mehr benötigter Schienenelemente auf Veränderungen der jeweils erforderlichen Fahrfläche angepasst werden kann.

Das Schienensystem 200 ist bevorzugt als Hängesystem ausgebildet, d.h. es ist an einer Decke oder an einer hängenden Tragkonstruktion in einer Fertigungs- oder Versuchshalle montiert. Andererseits kann das Schienensystem prinzipiell aber auch in einem Hallenboden eingelassen sein.

Für die weiteren Erläuterung der Erfindung sollen die im unteren Bereich der Anordnung von Fig. 2 befindlichen sieben kreisförmigen Schienenelemente 201a, 201b bis 201g hervorgehoben werden. So kann der Schlitten 900, abhängig von der jeweiligen Bewegungsrichtung eines mit seiner Versorgungsleitung daran angebundenen Fahrzeugs, z.B. ausschließlich im Schienenelement 201c geführt werden. Der Schlitten 900 kann auch über tangentiale Verbindungsstellen, die als Schienenweichen ausgebildet sind, in ein benachbartes Schienenelement übergehen, z.B. über die Verbindungsstelle 202b in das Schienenelement 201b, von dort über das Verbindungselement 202a in das benachbarte Schienenelement 201a und schließlich über das Verbindungselement 202c wieder in das Schienenelement 201c zurück. Auf diese Weise das der Schlitten in jedes Schienenelement des Schienensystems 200 übergehen und damit einem über eine Versorgungsleitung daran angebundenen Fahrzeug eine freie Manövrierbarkeit auf der Fahrfläche F ermöglichen.

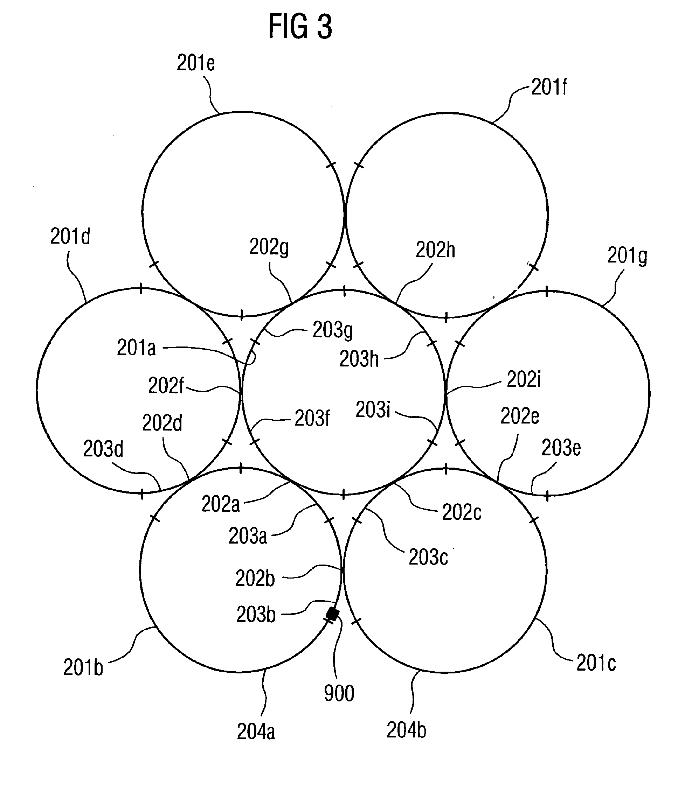

Fig. 3 zeigt einen Ausschnitt aus der Schienenanordnung 200 von Fig. 2, wobei die kreisförmigen Schienenelemente 201a bis 201g vergrößert dargestellt sind. Die Schienenelemente sind wiederum wabenförmig angeordnet und weisen die tangentialen Verbindungsstellen 202a, 202b, 202c, 202d, 202e, 202f, 202g, 202h und 202i auf. Über diese Verbindungsstellen kann ein Schlitten 900 auf benachbarte Schienenelemente überwechseln und somit problemlos einer Fahrtrichtungsänderung eines über eine Versorgungsleitung daran angebundenen Fahrzeugs folgen.

Bei einer weiteren, in den Figuren 2 und 3 bereits dargestellten bevorzugten Ausführung der Erfindung sind die Verbindungsstellen als annähernd x-förmige Schienenweichen ausgebildet, welche jeweils aus zwei gegeneinander gekrümmten Schienensegmenten bestehen. So wird beispielsweise die Verbindungsstelle 202b zwischen den Schienenelementen 201b und 201c durch die annähernd x-förmige Schienenweiche 203b gebildet. Deren beiden gegeneinander gekrümmten Schienensegmenten, d.h. ein erstes nach links und ein zweites nach rechts gekrümmtes Schienensegment, sind bevorzugt bogenförmig und weisen in Bezug auf die Mittelpunkte der angrenzenden Schienenelemente 201b und 201c jeweils einen Winkel von 60 Grad auf.

Eine derartige Ausführung ermöglicht es, die in Fig. 3 dargestellte Schienenanordnung mit Hilfe von nur zwei Schienentypen aufzubauen, nämlich aus den oben beschriebenen Schienenweichen und aus halbkreisförmigen Schienenbögen. So ist beispielsweise das innen liegende Schienenelement 201a ausschließlich aus den Schienenweichen 203c, 203a, 203f, 203g, 203h und 203i aufgebaut. Die nach innen gekrümmten Schienensegmente dieser Schienenweichen weisen in Bezug auf den Mittelpunkt des Schienenelementes 201a jeweils einen Winkel von 60 Grad auf. Das Schienenelement 201a wird ausschließlich aus diesen Schienensegmenten gebildet.

Andererseits bilden die x-förmigen Schienenweichen eines Schienenelements gleichzeitig die tangentialen Übergangsbereiche zu benachbarten Schienenelementen. So bildet z.B. die Schienenweiche 203b im Verbindungspunkt 202b den Übergang vom Schienenelement 201b auf das Schienenelement 201c. Der Schlitten 900 kann darüber von dem einen auf das andere Schienenelement überwechseln. Im Beispiel der Fig. 3 besteht das Schienenelement 201b somit aus den Schienenweichen 203b, 203a, 203d und dem halbkreisförmigen Schienenbogen 204a im Außenbereich der Anordnung. Entsprechend besteht das Schienenelement 201c somit aus den Schienenweichen 203b, 203c, 203e und dem halbkreisförmigen Schienenbogen 204b im Außenbereich der Anordnung.

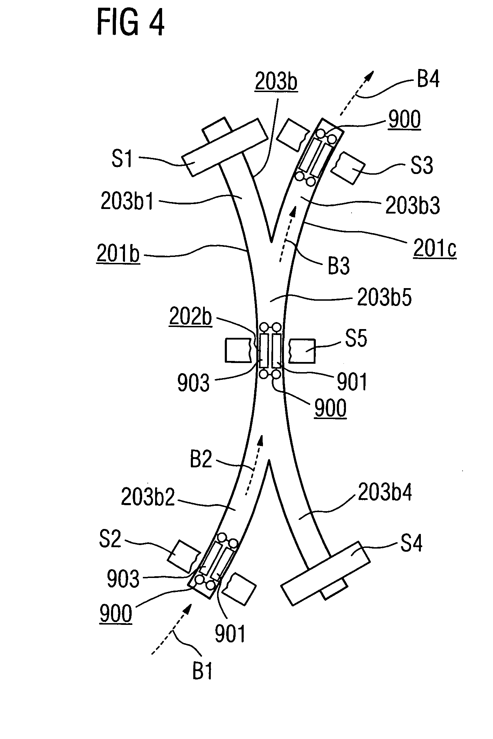

Fig. 4 zeigt eine Draufsicht auf eine beispielhafte Ausführung für die Schienenweiche 203b an der tangentialen Verbindungsstelle 202b zwischen den Schienenelementen 201b und 201c. Diese weist einen ersten, nach links gekrümmten Schienenbogen 203b1, 203b2 und einen zweiten, nach rechts gekrümmten Schienenbogen 203b3, 203b4 auf. Vorteilhaft ist der Schienenbogen 203b1, 203b2 Bestandteil des kreisförmigen Schienenelements 201b und umfasst in Bezug auf dessen Mittelpunkt einen Winkel von 60 Grad. Entsprechend ist der Schienenbogen 203b3, 203b4 Bestandteil des kreisförmigen Schienenelements 201c und umfasst in Bezug auf dessen Mittelpunkt einen Winkel von 60 Grad. Im Weichenbereich 203b5, welcher die tangentiale Verbindungsstelle 202b zwischen den Schienenelementen 201b und 201c bildet, greifen die Schienenbögen ineinander, so dass die Umlenkung eines Schlittens von dem einen in den anderen benachbarten Schienenbogen möglich ist. Dies wird nachfolgend am Beispiel des Schlittens 900 erläutert.

Dieser weist erfindungsgemäß mindestens zwei Linearmotoren 901, 903 auf, die so angeordnet sind, dass durch eine Abschaltung des einen der beiden Linearmotoren zumindest im Bereich der tangentialen Verbindungsstelle 202b der Schienenelemente 201b, 201c im Beispiel der Fig. 4 ein Übergang des Schlittens 900 in der Schienenweiche 203b aus dem Schienenelement 201b in das angrenzende Schienenelement 201c hervorgerufen wird. Die Bewegungsrichtung des Schlittens 900 ist in Fig. 4 durch strichlierte Pfeile B1 bis B4 dargestellt. Gemäß einer weiteren, vorteilhaften Ausführungsform sind die Linearmotoren 901, 903 des Schlittens 900 in Bewegungsrichtung B1 annähernd nebeneinander liegend angeordnet. Durch gezielte Zu- und Abschaltung einer der beiden Linearmotoren kann eine Zugkraft in Richtung auf die rechte oder linke Schienenwand ausgeübt und somit eine Umlenkung des Schlittens erreicht werden, wenn dieser gerade die tangentiale Verbindungsstelle zwischen benachbarten Schienenelementen passiert.

Die Zu- und Abschaltungen der beiden Linearmotoren 901, 903 kann durch fernsteuerbare Schaltelemente S1, S2, S3, S4, S5 vorgenommen werden. Im Beispiel der Fig. 4 sind je ein Schaltelement S1, S2 an den Enden des nach links gekrümmten Schienenbogens 203b1, 203b2 und je ein Schaltelement S3, S4 an den Enden des nach rechts gekrümmten Schienenbogens 203b3, 203b4 platziert. Weiterhin ist ein Schaltelement S5 unmittelbar im Weichenbereich 203b5 der beiden Schienenbögen angeordnet. Passiert der Schlitten 900 im Beispiel der Fig. 4 während seiner Bewegung in Richtung B1 und seinem Eintritt in den Schienenbogen 203b2 das Schaltelement S1, so wird erfindungsgemäß der Linearmotor 903 zugeschaltet und der Linearmotor 901 abgeschaltet. Die hierdurch erzeugte Zugkraft in Richtung auf die linke Schienenwand bewirkt in Richtung B2 einen störungsfreien Eintritt des Schlittens 900 in den unmittelbaren Weichenbereich 203b5. Passiert der Schlitten 900 auf seinem weiten Weg das dort befindliche Schaltelement S3, so wird der Linearmotor 903 ab- und der Linearmotor 901 zugeschaltet. Die hierdurch erzeugte Zugkraft in Richtung auf die rechte Schienenwand bewirkt in Richtung B3 einen störungsfreien Eintritt des Schlittens 900 in den nach rechts gekrümmten Winkelbogen 203b3 und damit einen Übergang in das Schienenelement 201c. Passiert schließlich der Schlitten 900 bei seinem Austritt aus der Schienenweiche 203b das recht oben befindliche Schaltelement S5, so können anwendungsabhängig entweder beide Linearmotoren zugeschaltet oder auch abgeschaltet werden. Im ersten Falle würde der Schlitten dann selbst angetrieben werden und einem über seine Versorgungsleitung daran angebundenen Fahrzeug folgen, im letzteren Falle würde der Schlitten von dem über die Versorgungsleitung angebundenen Fahrzeug mitgeschleppt werden. Die Erfindung ermöglicht somit die Einstellung einer jeden gewünschten Fahrrichtung bzw. Richtungsänderung eines Schlittens im Bereich einer Schienenweiche.

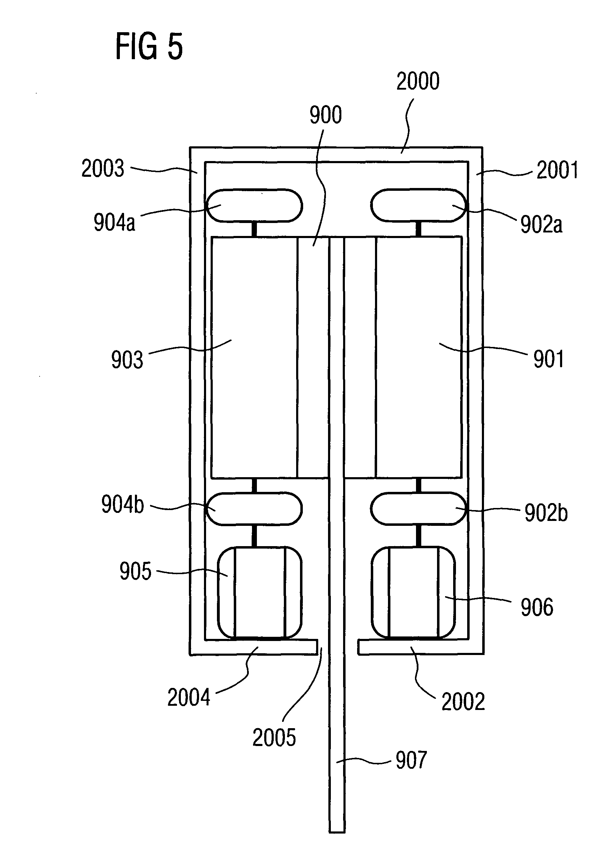

Fig. 5 zeigt schließlich einen Schnitt durch das Profil einer Schiene 2000 und durch eine bevorzugt Ausführungsform für einen im Inneren der Schiene geführten Schlitten 900. Dieser ist bevorzugt als ein Hängeschlitten ausgeführt. Das beispielhafte Schienenprofil 2000 weist auf der rechten Seite eine vertikale Schienenwand 2001 mit einem unten abgewinkelten und nach innen gerichteten Laufstreifen 2002, und auf der linken Seite eine vertikale Schienenwand 2003 mit einem unten abgewinkelten und nach innen gerichteten Laufstreifen 2004 auf. Ein Schlitz 2005 zwischen den beiden Laufstreifen 2002, 2004 ermöglicht den Durchtritt eines Montagestabes 907 des Linearmotors 900. An den Montagestab 907 kann eine durch den Schlitten 900 nachzuführende Versorgungsleitung für ein Fahrzeug angebunden werden.

Der Schlitten 900 weist erfindungsgemäß einen rechten und linken Linearmotor 901, 903 auf, die vorteilhaft in Fahrtrichtung nebeneinander liegend angeordnet sind. Abhängig von der jeweils notwendigen Kurvenfahrt des Schlittens können diese Linearmotoren wechselseitig zu- bzw. abgeschaltet sein. Wird z.B. der Linearmotor 903 zu und der Linearmotor 902 abgeschaltet, so wird eine auf die linke vertikale Schienenwand 2003 gerichtet Zugkraft ausgeübt und eine nach links gerichtete Kurvenfahrt ermöglicht.

Zur störungsfreien und möglichst reibungsarmen Führung weist der Schlitten 900 einerseits untere Laufrollen 905, 906 auf, die auf den Laufstreifen 2004, 2002 geführt werden. Zur seitlichen Abstützung sind je zwei Paare von seitlichen Stützrollen vorhanden. So wird der Linearmotor 901 über die seitlichen Stützrollen 902a, 902b auf der Innenseite der rechten Schienenwand 2001 und der Linearmotor 903 über die seitlichen Stützrollen 904a, 904b auf der Innenseite der linken Schienenwand 2003 abgestützt.

## Patentansprüche

1. Schlittensystem mit zumindest einem Schlitten (900) zur Nachführung der Versorgungsleitung (105) insbesondere für ein Fahrzeug (101), mit
a) einem Schienensystem (200) zur Führung des Schlittens (900), das ringförmig geschlossene Schienenelemente (201a,201b,201c) aufweist, deren tangentiale Verbindungsstellen (202a,202b,202c) als Schienenweichen (203b) für den Schlitten (900) ausgebildet sind, und wobei
b) der Schlitten (900) mindestens zwei Linearmotoren (901, 903) aufweist, die so angeordnet sind, dass durch eine Abschaltung eines der beiden Linearmotoren (903) zumindest im Bereich einer tangentialen Verbindungsstelle (202b) zweier Schienenelemente (201b, 201c) ein Übergang des Schlittens (900) in der Schienenweiche (203b) aus dem einen Schienenelement (201b) in das angrenzende Schienenelement (201c) hervorgerufen wird.

2. Schlittensystem nach Anspruch 1, wobei die Linearmotoren (901, 903) eines Schlittens (900) in Bewegungsrichtung (B1) annähernd so nebeneinander liegend angeordnet sind, dass durch eine Abschaltung eines der beiden Linearmotoren (903) eine Zugkraft in Richtung auf die Schienenwand (2001) von demjenigen Schienenelement (201c) generiert wird, in das der Schlitten (900) übergehen soll.

3. Schlittensystem nach Anspruch 1 oder 2, wobei eine Schienenweiche (203b) zwei gegeneinander gekrümmte Schienensegmente (203b1,203b2; 203b3,203b4) aufweist, die einen gemeinsamen, die tangentiale Verbindungsstelle (203b5) zwischen angrenzenden Schienenelementen (201b,201c) bildenden Weichenbereich (203b5) aufweisen.

4. Schlittensystem nach Anspruch 3, wobei die ringförmig geschlossenen Schienenelemente (201a, 201b, 201c) des Schienensystems (200) kreisförmig sind.

5. Schlittensystem nach Anspruch 4, wobei die Schienensegmente (203b1,203b2; 203b3,203b4) einer Schienenweiche (203b) in Bezug auf die Mittelpunkte der angrenzenden Schienenelemente (201b,201c) einen Winkel von 60 Grad aufweisen.

6. Schlittensystem nach einem der vorangegangenen Ansprüche wobei die ringförmig geschlossenen Schienenelemente (201a, 201b, 201c) des Schienensystems (200) als Hängeelemente insbesondere für eine Deckenmontage ausgebildet sind.
